# FASCICULE DE BREVET EUROPEEN

(11) **EP 3 675 438 B1**
(45) Date de publication et mention de la délivrance du brevet: **16.08.2023**
(21) Numéro de dépôt: 19218736.7
(22) Date de dépôt: 20.12.2019
(51) Int. Cl.: H04L 12/413, H04L 47/20, H04L 47/24, H04L 47/28, H04L 47/283, H04L 47/10, H04L 47/32, H04L 49/351, H04L 49/60, H04L 45/74, H04L 47/2483, H04L 12/40

(54) **PROCÉDÉ DE CONFIGURATION D'UN RÉSEAU AVIONIQUE, PRODUIT PROGRAMME D'ORDINATEUR ET MODULE DE CONFIGURATION ASSOCIÉS**
KONFIGURATIONSVERFAHREN EINES AVIONIK-NETZES, ENTSPRECHENDES COMPUTERPROGRAMMPRODUKT UND KONFIGURATIONSMODUL
METHOD FOR CONFIGURING AN AVIONICS NETWORK, ASSOCIATED COMPUTER PROGRAM PRODUCT AND CONFIGURATION MODULE

(30) Priorité: 26.12.2018 FR 1874162
(43) Date de publication de la demande: 01.07.2020
(73) Titulaire: Thales, 92400 Courbevoie (FR)
(72) Inventeur: TEMPLIER, Michael, 31100 TOULOUSE (FR); NEUSER, Jean-Philippe, 31100 TOULOUSE (FR)
(74) Mandataire: Lavoix

(56) Documents cités:
- EP-A1- 3 076 605
- ANAÏS FINZI ET AL: "Mixed-Criticality on the AFDX Network: Challenges and Potential Solutions", PROCEEDINGS OF THE THE 9TH EUROPEAN CONGRESS EMBEDDED REAL TIME SOFTWARE AND SYSTEMS (ERTS 2018), 31 janvier 2018 (2018-01-31), pages 1-9, XP055630254,

## Description

La présente invention concerne un procédé de configuration d'un réseau avionique.

La présente invention concerne également un produit programme d'ordinateur et un module de configuration associés.

En particulier, l'invention permet de mettre en oeuvre un réseau avionique mixte de types ARINC 664 P7 et Ethernet à routage prédéterminé.

De manière connue en soi, la norme ARINC 664 permet de mettre en oeuvre des réseaux informatiques avioniques. Basée sur le standard Ethernet, elle permet en particulier d'adapter l'utilisation de ce standard au contexte avionique et notamment, aux contraintes avioniques.

La norme ARINC 664 est composée de plusieurs parties, chaque partie étant utilisable en fonction de contraintes imposées aux données transitant via le réseau avionique mis en oeuvre selon cette norme.

Parmi ces parties, on connait notamment la partie référencée par « P7 » et dénotée généralement par « ARINC 664 P7 » ou « ARINC 664 Part 7 » ou encore « AFDX ^{®} ».

Cette partie P7 est utilisable pour transmettre des données avioniques entre différents systèmes avioniques mettant en oeuvre des fonctions essentielles de l'avion et présente ainsi le plus grand nombre de contraintes.

Ainsi, un réseau avionique mis en oeuvre selon la partie P7 présente un réseau ségrégué, redondant et déterministe. Le déterminisme de ce réseau signifie en particulier que chaque trame émise atteint sa destination en un temps maximal connu.

Dans certains réseaux avioniques, il est également possible d'utiliser le protocole Ethernet (au sens de la norme IEEE 802.3-2000 et versions ultérieures) combiné avec un certain nombre de restrictions additionnelles imposées par la nature du réseau correspondant.

En comparaison avec la partie P7 de la norme ARINC 664, le protocole Ethernet avec des restrictions présente moins de contraintes et est ainsi utilisable pour mettre en oeuvre des réseaux avioniques transmettant des données moins sensibles et/ou moins critiques.

Ces données présentent généralement des données de maintenance, de téléchargement et des fonctions de service pour l'équipage relatives à différents systèmes avioniques. Ainsi, en cas de perte de ces données, elles peuvent être retransmises de nouveau sans créer de risque considérable pour la sécurité de l'avion.

Les restrictions additionnelles imposées sur le protocole Ethernet peuvent notamment concerner la manière de routage des trames. Ainsi, par exemple, ce routage peut être prédéterminé au sein de chaque commutateur du réseau, en fonction de l'identifiant de la trame.

Cela est par exemple le cas de la partie référencée par « P3 » de la norme ARINC 664 qui est basée également sur le protocole Ethernet mais qui présente moins de contraintes en comparaison avec la partie P7 et recommande cependant un usage de réseau configuré statiquement pour un mode opérationnel sur l'avion.

Dans un avion, les réseaux de type ARINC 664 P7 et de type Ethernet (éventuellement avec restrictions additionnelles) sont ségrégués l'un de l'autre. Cette ségrégation est obtenue en utilisant des moyens physiques différents pour mettre en oeuvre ces réseaux.

Cela signifie en particulier que, pour assurer une telle ségrégation, ces réseaux utilisent des commutateurs et des moyens de transmission physiquement différents.

On conçoit alors que ce type de ségrégation implique au moins un doublement de chaque composante physique mettant en oeuvre ces réseaux. Cela implique alors de nombreux problèmes en termes d'encombrement et de poids dans une structure accueillant ces réseaux telle qu'un avion.

Dans l'état de la technique, on connait déjà quelques exemples de réseaux dits mixtes, c'est-à-dire des réseaux à la fois de type ARINC 664 P7 et de type Ethernet.

Ainsi, selon un exemple connu, cette mixabilité est atteinte par l'introduction d'une passerelle spécifique entre les réseaux des deux types permettant de transmettre des trames entre ces réseaux. Toutefois, cette solution ne diminue pas le nombre de composantes physiques utilisées et ne répond donc pas aux problèmes d'encombrement et de poids cités précédemment.

Selon un autre exemple connu, une mixabilité ARINC 664 P7 et Ethernet à routage prédéterminé est atteinte en utilisant des commutateurs communs à ces deux types de réseaux mais comportant des ports dédiés à chacun de ces types. Même si cette solution permet de diminuer le nombre des commutateurs utilisés, elle ne permet pas de résoudre complètement les problèmes d'encombrement et de poids car des moyens de transmission différents doivent toujours être utilisés. De plus, cette solution multiple le nombre de ports au sein d'un même commutateur ce qui rend sa structure particulièrement complexe.

On connait encore d'autres exemples de réseaux mixtes de EP 3 076 605 A1.

La présente invention a pour but de proposer un procédé de construction d'un réseau avionique mixte permettant d'utiliser les mêmes commutateurs et les mêmes moyens de transmission pour des réseaux de types ARINC 664 P7 et Ethernet, et de résoudre donc plus efficacement les problèmes d'encombrement et de poids précités. Autrement dit, la présente invention a pour but de proposer un procédé de construction permettant de construire un réseau avionique mixte permettant d'utiliser pour les réseaux de types ARINC 664 P7 et Ethernet précités les mêmes couches physiques comprenant donc les commutateurs, le câblage et les ports des émetteurs/récepteurs communs.

À cet effet, l'invention a pour objet un procédé de configuration conforme à la revendication 1.

Suivant d'autres aspects avantageux de l'invention, le procédé comprend une ou plusieurs des caractéristiques des revendications 2 à 10.

L'invention a également pour objet un produit programme d'ordinateur comportant des instructions logicielles qui, lorsque mises en oeuvre par un équipement informatique, mettent en oeuvre le procédé tel que défini précédemment.

L'invention a également pour objet un module de configuration d'un réseau avionique comprenant des moyens techniques configurés pour mettre en oeuvre le procédé tel que défini précédemment.

Ces caractéristiques et avantages de l'invention apparaitront à la lecture de la description qui va suivre, donnée uniquement à titre d'exemple non limitatif, et faite en référence aux dessins annexés, sur lesquels :
[Fig 1] la figure 1 est une vue schématique d'un aéronef comportant un réseau avionique de type ARINC 664 P7 et un réseau avionique de type Ethernet à routage prédéterminé ;
[Fig 2] la figure 2 est une vue schématique d'un système de communication mettant en oeuvre un réseau avionique mixte composé des réseaux avioniques de la figure 1, et d'un module de configuration permettant de configurer ce réseau avionique mixte, conformément à l'invention ; et
[Fig 3] la figure 3 est une vue schématique de trames transmises par le système de communication de la figure 2, selon un exemple particulier de réalisation de ce système.

Dans tout ce qui suit, toute mention d'une norme, notamment d'une norme informatique, fait référence à des principes généraux de cette norme qui sont bien connus de l'homme du métier et qui sont indépendants de différentes versions de cette norme, sauf mention explicite.

### Premier mode de réalisation

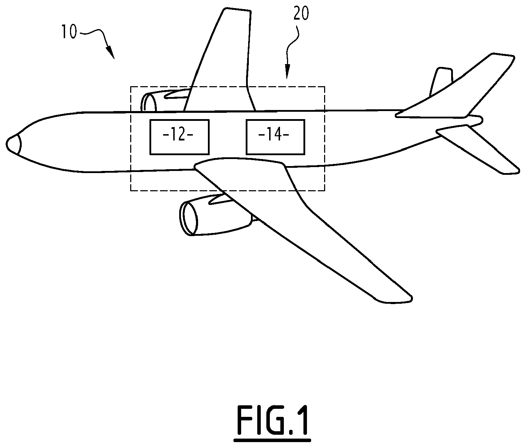

La figure 1 illustre un aéronef 10 tel qu'un avion.

L'aéronef 10 comprend un réseau avionique 12 de type ARINC 664 P7 un réseau avionique 14 de type Ethernet à routage prédéterminé.

Le réseau avionique 12 permet de transmettre des données sensibles entre différents systèmes avioniques. Par donnée sensible, on comprend notamment toute donnée dont la perte ou un délai en transmission peut avoir une influence sur la sécurité de l'aéronef 10.

Le réseau avionique 14 permet de transmettre des données moins sensibles en comparaison avec le réseau avionique 12. Ainsi, par exemple, ces données correspondent à des données de maintenance échangées entre l'aéronef 10 et le sol.

Les réseaux avioniques 12 et 14 sont mis en oeuvre par un même système physique de communication avionique 20.

Autrement dit, le système de communication avionique 20 permet de mettre en oeuvre un réseau avionique mixte composé des deux réseaux avioniques 12, 14 de natures différentes.

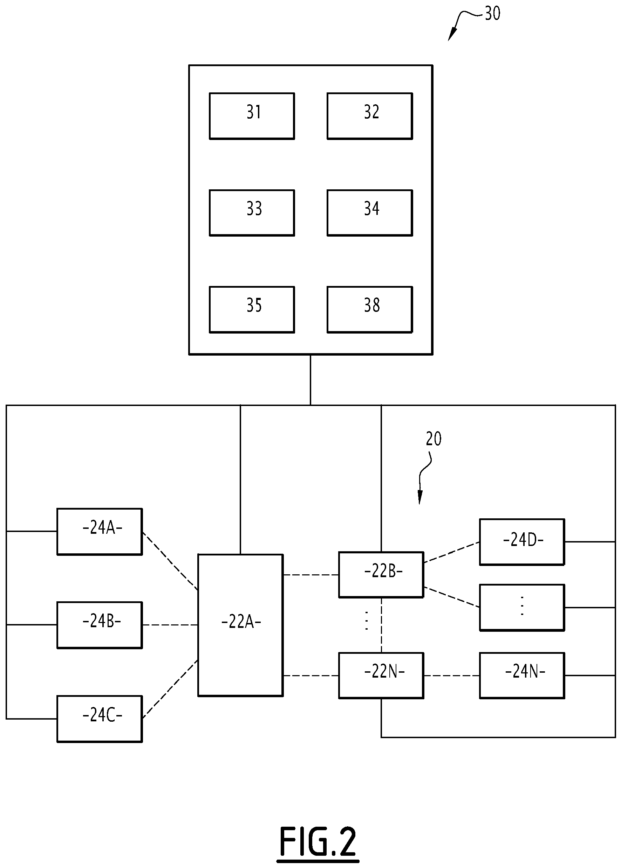

Un exemple d'un tel système de communication avionique 20 est illustré sur la figure 2.

Ainsi, en référence à cette figure, ce système de communication 20 comprend une pluralité de commutateurs 22A,...,22N et une pluralité d'équipements 24A,...,24N.

Chaque équipement 24A,...,24N, connu également sous le terme anglais de « End System », est intégré dans un système avionique et assure la communication de ce système avec les réseaux 12, 14.

Ainsi, en fonction du système avionique dans lequel il est intégré, chaque équipement 24A,...,24N peut être émetteur et/ou récepteur de données numériques et comprend une table de configuration permettant de définir le fonctionnement de cet équipement comme cela sera expliqué par la suite.

Chaque équipement 24A,...,24N est raccordé à au moins l'un des commutateurs 22A,...22N via des moyens de transmission et via au moins un port de ce commutateur. Les moyens de transmission présentent par exemple un câble à paire torsadée ou tout autre type de câble permettant une transmission bidirectionnelle de données.

Chaque commutateur 22A,...22N comprend ainsi une pluralité de ports d'entrée et de sortie, et une table de configuration. Chaque port d'entrée est apte à recevoir des données numériques entrantes pour les transmettre vers un ou plusieurs ports de sortie conformément à la table de configuration du commutateur correspondant, comme cela sera expliqué plus en détail par la suite.

Les commutateurs 22A,...22N sont reliés entre eux par des moyens de transmission présentant également par exemple un câble à paire torsadée ou tout autre type de câble permettant une transmission bidirectionnelle de données.

Selon l'invention, le module de configuration 30 permet de configurer le fonctionnement du système de communication 20 et notamment des commutateurs 22A,...,22N et des équipements 24A,...,24N.

Pour ce faire, le module de configuration 30 permet de déterminer une pluralité de règles de fonctionnement de ces éléments et de transmettre ces règles au système de communication 20 par exemple au démarrage de celui-ci.

En particulier, le module de configuration 30 comprend une unité de détermination de règles d'émission 31, une unité de détermination de règles de cheminement 32, une unité de détermination de règles de priorité 33, une unité de détermination de règles de filtrage 34, une unité de détermination de règles de contrôle 35 et une unité de transmission 38.

Selon une variante de réalisation, le module de configuration 30 se présente sous la forme d'un dispositif électronique indépendant, notamment sous la forme d'un calculateur. Dans ce cas, chacune des unités 31 à 38 se présente au moins partiellement sous la forme d'un logiciel exécutable par ce calculateur.

Selon une autre variante de réalisation, le module de configuration 30 est intégré dans un dispositif électronique et notamment, dans un calculateur existant. Dans ce cas, ce module 30 ainsi que les unités 31 à 38 se présentent au moins partiellement sous la forme de logiciels exécutables par ce calculateur.

Selon encore une variante, le module de configuration 30 se présente sous la forme d'une pluralité de calculateurs. Dans ce cas, les unités 31 à 38 peuvent se présenter sous la forme de logiciels mis en oeuvre par des calculateurs différents.

Dans chacune de ces variantes, les unités 31 à 38 peuvent se présentent également au moins partiellement sous la forme d'un circuit logique programmable de type FPGA (de l'anglais « Field-Programmable Gate Array ») ou autre.

### Unité de détermination de règles d'émission

L'unité de détermination de règles d'émission 31 permet de déterminer des règles d'émission de données numériques dans le système de communication 20.

Ces règles sont notamment destinées aux équipements 24A,...,24N et notamment aux équipements émetteurs 24A,...,24N.

Selon ces règles, les données numériques émises dans le système de communication 20 doivent être émises sous la forme de trames de premier type ou de trames de deuxième type.

Chaque trame de premier type est conforme à un premier protocole mettant en oeuvre le fonctionnement du réseau avionique 12.

Selon l'invention, le premier protocole est de type ARINC 664 P7.

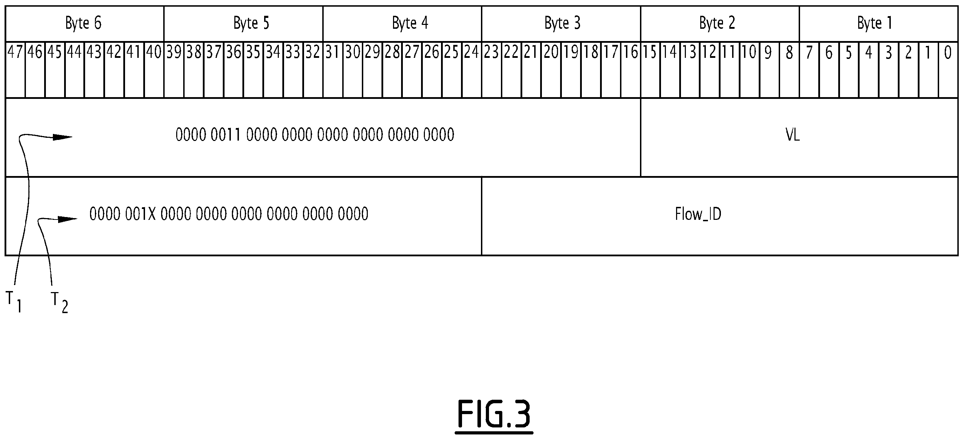

Ainsi, chaque trame de premier type comprend un entête comportant notamment un champ dit « MAC DEST » qui est illustré schématiquement sur la figure 3 pour une trame T₁ de premier type.

Ainsi, comme cela est illustré sur cette figure, ce champ « MAC DEST » s'étend sur 6 octets.

Dans le cas de la trame T₁, comme cela est connu en soi, les octets 3 à 6 dénotés sur la figure 3 par les références Byte 3 à Byte 6 sont réservés à une valeur particulière, commune pour toutes les trames de type ARINC 664 P7. Cette valeur est égale à « 0000 0011 0000 0000 0000 0000 0000 0000 ».

Par ailleurs, comme cela est également connu en soi, les octets 1 et 2 de la trame T₁ dénotés sur la figure 3 par les références Byte 1 à Byte 2 correspondent à une valeur VL appelée « lien virtuel » (ou « Virtual Link » en anglais) et définissant le cheminement de la trame.

En outre, les trames de premier type comportant une même valeur VL forment un même flux de premier type. La valeur VL est mémorisée dans la table de configuration de chaque commutateur par lequel le flux correspondant à cette valeur VL transite et permet ainsi de cheminer chaque trame au sein de ce commutateur.

Au sens de la présente invention, la valeur VL de chaque trame de premier type est appelée identifiant de la trame correspondante.

Chaque trame de deuxième type est conforme à un deuxième protocole mettant en oeuvre le fonctionnement du réseau avionique 14.

Selon l'invention, le deuxième protocole est de type Ethernet (au sens de la norme IEEE 802.3-2000 et versions ultérieures) à routage prédéterminé.

Dans tout ce qui suit, par « routage prédéterminé », on entend un routage selon lequel chaque trame est cheminée par les commutateurs 22A,...,22N selon des règles prédéterminées.

Ces règles prédéterminées définissent le cheminement de chaque trame de deuxième type au sein de chaque commutateur 22A,...,22N et sont déterminées par l'unité 32 comme cela sera expliqué par la suite. Puis, ces règles sont mémorisées dans la table de configuration de chaque commutateur 22A,...,22N.

Ainsi, par exemple, cela est le cas lorsque la table de configuration de chaque commutateur 22A,...,22N définit pour chaque trame un port d'entrée et un ou plusieurs ports de sortie, ou lorsque la table de configuration de chaque commutateur 22A,...,22N définit pour chaque trame un ou plusieurs ports de sortie.

Selon un exemple particulier de réalisation de l'invention, les trames de deuxième type sont conformes au protocole ARINC 664 P3.

Chaque trame de deuxième type comprend également un entête comportant des bits réservés par la norme IEEE 802.3.

Par ailleurs, lorsque les trames de deuxième type sont conformes au protocole ARINC 664 P3, cet entête comprend également un champ dit « MAC DEST » illustré sur la figure 3 pour une trame T₂ de deuxième type.

Selon l'invention, l'entête de chaque trame de deuxième type et en particulier ses octets 3 à 6, peuvent prendre toute valeur autre que les octets correspondants de l'entête des trames de premier type, c'est-à-dire toute valeur autre que la valeur « 0000 0011 0000 0000 0000 0000 0000 0000 ».

Cela permet alors de distinguer de manière sure les trames de premier type et les trames de deuxième type.

Par ailleurs, selon l'invention, l'entête de chaque trame de deuxième type définit une valeur Flow_ID appelée « identifiant de flux » (ou « Flow ID » en anglais). Cette valeur Flow_ID est définie hors les bits réservés par la norme IEEE 802.3 avec un usage local Ethernet.

Les trames de deuxième type comportant une même valeur Flow_ID forment un même flux de deuxième type. Cette valeur Flow_ID est mémorisée dans la table de configuration de chaque commutateur par lequel le flux correspondant à cette valeur Flow_ID transite. Cela permet à ce commutateur d'identifier chaque trame et de cheminer cette trame de façon prédéterminée, conformément à sa table de configuration.

Au sens de la présente invention, la valeur Flow_ID de chaque trame de deuxième type est appelée identifiant de la trame correspondante.

Comme cela est illustré sur la figure 3, pour une trame T₂ conforme au protocole ARINC 664 P3, la valeur Flow_ID peut être portée par exemple par les octets 1 à 3 du champ « MAC DEST ».

Les règles d'émission comprennent en outre la définition d'un cadencement minimal et d'une bande passante pour chaque flux de premier type.

Le cadencement minimal correspond à un intervalle minimal d'émission de deux trames consécutives d'un même flux.

La bande passante correspond au débit maximal de trames d'un même flux.

Le cadencement minimal est connu sous le terme anglais de « BAG » (pour « *Bandwidth Allocation Gap* ») et permet de définir notamment une bande passante autorisée pour le flux correspondant.

### Unité de détermination de règles de cheminement

L'unité de détermination de règles de cheminement 32 permet de déterminer des règles de cheminement dans le système de communication 20 pour chaque flux de chaque type.

Ces règles sont notamment destinées aux commutateurs 22A,...,22N et définissent le routage de chaque trame à partir d'un équipement émetteur jusqu'un équipement récepteur en passant par un ou plusieurs commutateurs 22A,...,22N.

Au sein de chaque commutateur 22A,...,22N, pour chaque flux de premier type, ces règles définissent un port d'entrée et un ou plusieurs ports de sortie.

Pour chaque flux de deuxième type, ces règles définissent un ou plusieurs ports de sortie et de préférence, un port d'entrée.

Les règles de cheminement sont par exemple déterminées en fonction de la topologie du réseau.

### Unité de détermination de règles de priorité

L'unité de détermination de règles de priorité 33 permet de déterminer des règles de priorité dans le système de communication 20 pour chaque flux de chaque type.

Ces règles définissent la priorité en émission et traitement des trames et sont notamment destinées aux commutateurs 22A,...,22N et aux équipements 24A,...,24N.

En particulier, comme cela est connu en soi, un niveau de priorité est défini pour chaque flux de premier type. Ce niveau de priorité est choisi par exemple parmi quatre niveaux possibles.

En outre, selon l'invention, au moins un niveau de priorité inférieur à chaque niveau de priorité de chaque flux de premier type, est choisi pour chaque flux de deuxième type.

Ce niveau de priorité est défini par exemple pour chaque trame de deuxième à partir de la valeur Flow_ID de cette trame.

Ainsi, lors du fonctionnement du système de communication 20, chaque trame de premier type est prioritaire par rapport à chaque trame de deuxième type.

Selon l'invention, quel que soit le niveau de priorité des trames de deuxième type, celui-ci est toujours inférieur au niveau de priorité de chaque trame de premier type.

Bien entendu, il est possible de définir plusieurs niveaux de priorité pour chaque flux de deuxième type si chacun de ces nivaux reste inférieur à chaque niveau de priorité de chaque flux de premier type.

### Unité de détermination de règles de filtrage

L'unité de détermination de règles de filtrage 34 permet de déterminer des règles de filtrage dans le système de communication 20 pour chaque flux premier type, comme cela est connu en soi.

Ces règles définissent des opérations filtrage qui sont effectuées par chaque commutateur 22A,...,22N en relation avec les trames entrantes de premier type et sont donc destinées à ces commutateurs 22A,...,22N.

En particulier, chaque opération de filtrage appliqué à une trame de premier type correspond :
- à l'identification de l'identifiant de la trame, c'est-à-dire de sa valeur VL, et au rejet de cette trame lorsque son identifiant n'est pas attendu par le commutateur correspondant ; ou
- identification de la taille de la trame et rejet de cette trame lorsque sa taille dépasse un seuil prédéterminé.

Selon un exemple avantageux de réalisation de l'invention, l'unité de détermination de règles de filtrage 34 permet de déterminer pour chaque commutateur 22A,...,22N des règles de filtrage en relation également avec chaque flux de deuxième type.

Ces règles permettent par exemple d'imposer aux commutateurs 22A,...,22N les mêmes opérations de filtrage comme dans le cas des flux de premier type ou au moins certaines de ces règles.

### Unité de détermination de règles de contrôle

L'unité de détermination de règles de contrôle 35 permet de déterminer des règles de contrôle par chaque commutateur 22A,...,22N de chaque flux de premier type.

Ainsi, comme cela est connu en soi, pour chaque trame de premier type, le contrôle effectué par chaque commutateur 22A,...,22N comprend le contrôle d'au moins l'une des valeurs suivantes :
- bande passante de ce flux ;
- gigue ;
- cadencement minimal.

### Unité de transmission

L'unité de transmission 38 permet de transmettre l'ensemble des règles déterminées par les unités 31 à 35 aux commutateurs 22A,...,22N et/ou aux équipements 24A,...,24N.

En particulier, l'unité de transmission 38 permet de récupérer l'ensemble de règles déterminées par les unités 31 à 35 et de les représenter sous une forme exploitable par chacun des commutateurs 22A,...,22N et/ou des équipements 24A,...,24N.

Cette forme exploitable présente par exemple un tableau ou toute autre structure permettant de programmer le fonctionnement de chaque commutateur 22A,...,22N et de chaque équipement 24A,...,24N.

En particulier, la forme exploitable de ces règles permet de programmer les tables de configuration de chaque commutateur 22A,...,22N et de chaque équipement 24A,...,24N afin d'imposer ces règles au fonctionnement de ces éléments. Cette programmation est effectuée selon des méthodes connues en soi.

En outre, l'unité de transmission 38 permet de transmettre les règles déterminées aux commutateurs 22A,...,22N et/ou aux équipements 24A,...,24N au démarrage du système de communication 20 ou lors de sa maintenance, en utilisant par exemple des liens de commande spécifiques prévus à cet effet.

Le procédé de configuration du réseau avionique sera désormais décrit.

Ce procédé est notamment mis en oeuvre lors du démarrage du système 20 ou lors de sa maintenance.

Ce procédé est mis en oeuvre par le module de configuration 30 et comprend les étapes suivantes :
- une étape de détermination des règles d'émission ;
- une étape de détermination des règles de cheminement ;
- une étape de détermination des règles de priorité ;
- une étape de détermination des règles de filtrage.

Ces étapes sont mises en oeuvre de manière parallèle ou consécutive par les unités 31 à 35 correspondantes.

Les unités 31 à 35 déterminent alors les règles décrites précédemment et les transmettent à l'unité de transmission 38.

Puis, le procédé comprend une étape de transmission de ces règles aux commutateurs 22A,...,22N et/ou aux équipements 24A,...,24N correspondants.

Cette étape est mise en oeuvre par l'unité de transmission 38 comme cela a été expliqué précédemment.

On conçoit alors que le premier mode de réalisation de l'invention permet de configurer un réseau avionique mixte de types ARINC 664 P7 et Ethernet. Ce réseau mixte est apte ainsi à fonctionner en utilisant les mêmes composantes physiques du système 20, c'est-à-dire les mêmes moyens de transmission, les mêmes commutateurs et les mêmes ports d'entrée et de sortie.

Cela permet alors de diminuer considérablement l'encombrement et le poids des réseaux 12 et 14 à bord de l'aéronef 10.

De plus, selon l'invention, le réseau mixte est configuré de sorte que le fonctionnement du réseau ARINC 664 P7 n'est sensiblement pas dégradé car le traitement des flux de ce réseau reste identique au traitement appliqué dans les réseaux classiques ARINC 664 P7 en considérant dans la conception le flux Ethernet comme un niveau supplémentaire de priorité la plus faible. Autrement dit, le système lors de l"émission est non préemptif ce qui signifie que lorsqu'une trame de deuxième type est en cours d'émission, cette émission sera finalisée et en particulier, ne sera pas interrompue en cas d'arrivée d'une trame de deuxième type. L'impact sur la performance au niveau de chaque commutateur est donc au maximum d'une trame de taille maximum. En effet, les flux de type ARINC 664 P7 restent toujours prioritaires par rapport aux flux de type Ethernet.

Les modes de réalisation décrits par la suite concernent uniquement la détermination des règles particulières en ce qui concerne le traitement des flux de deuxième type par les équipements et/ou les commutateurs. Ces règles permettent de rendre le réseau 14 plus déterministe.

En particulier selon l'invention, l'unité de détermination de règles d'émission 31 permet de déterminer en outre des règles d'émission imposant un cadencement et une bande passante pour chaque flux de deuxième type.

Les flux de deuxième type sont ainsi dits « BAGués » dans la mesure où des propriétés similaires à celles des flux de premier type sont associées à ces flux de deuxième type.

Comme cela sera expliqué par la suite, les cadencements et les bandes passantes peuvent être définis directement par l'unité de détermination de règles d'émission 31 ou au moins par certains des équipements émetteurs 24A,...,24N.

Comme pour le cas des cadencements et des bandes passantes des flux de premier type, les règles d'émission permettent d'imposer ces cadencements et ces bandes passantes pour les flux de deuxième type. Ces cadencements et ces bandes passantes sont ensuite mémorisés dans les tables de configuration des commutateurs 22A,...,22N et/ou des équipements 24A,...,24N correspondants.

Par ailleurs, dans chacun de ces modes de réalisation, les règles de contrôle précitées peuvent aussi imposer à chaque commutateur 22A,...,22N le contrôle d'au moins l'une des valeurs suivantes, pour chaque flux de deuxième type :
- bande passante de ce flux ;
- gigue ;
- cadencement minimal.

### Deuxième mode de réalisation

Dans un deuxième mode de réalisation, la bande passante de chaque flux de deuxième type est définie indépendamment des bandes passantes des flux de premier type.

Selon ce mode de réalisation, les bandes passantes des flux de deuxième type ne sont donc pas garanties car les flux de premier type restent prioritaires par rapport aux flux de deuxième type.

### Troisième mode de réalisation

Dans un troisième mode de réalisation, la bande passante de chaque flux de deuxième type est déterminée en fonction des bandes passantes des flux de premier type.

Cela signifie en particulier que la bande passante de chaque flux de deuxième type est définie comme le reste de la bande passante maximale des moyens de transmission correspondants après la soustraction des bandes passantes des flux de premier type correspondants et éventuellement compte tenu des bandes passantes trames de réserve.

### Quatrième mode de réalisation

Selon un quatrième mode de réalisation combinable avec le deuxième ou le troisième mode de réalisation, les règles d'émission imposent la définition par chaque équipement émetteur 24A,...,24N d'une bande passante totale pour l'ensemble des flux de deuxième type issus de cet équipement émetteur 24A,...,24N en fonction des bandes passantes totales déterminées par les autres équipements émetteurs 24A,...,24N. La bande passante pour chaque flux issu de cet équipement émetteur 24A,...,24N est définie à partir de cette bande passante totale.

Autrement dit, selon ce mode de réalisation, les règles d'émission imposent à chaque équipement émetteur 24A,...,24N de définir une bande passante totale pour l'ensemble des flux de deuxième type issus de cet équipement émetteur 24A,...,24N indépendamment des autres équipements émetteurs 24A,...,24N.

Dans ce cas, chaque bande passante totale est donc définie localement. Puis, à partir de cette bande passante totale, les règles d'émission permettent à l'équipement émetteur correspondant 24A,...,24N de définir la bande passante pour chaque flux issu de cet équipement émetteur de manière équitable ou pondérée.

En particulier, dans ce dernier cas, l'équipement émetteur correspondant peut définir une bande passante pour chacun de ses flux en fonction par exemple du niveau de priorité de ce flux, de sa nature, etc.

### Cinquième mode de réalisation

Selon un cinquième mode de réalisation combinable avec le deuxième ou le troisième mode de réalisation, les règles d'émission imposent à chaque équipement émetteur 24A,...,24N de définir une bande passante totale pour l'ensemble des flux de deuxième type issus de cet équipement émetteur en fonction des bandes passantes totales déterminées par les autres équipements émetteurs 24A,...,24N.

Dans ce cas, une même bande passante totale, correspondant à la bande passante totale minimale parmi l'ensemble des bandes passantes totales définies par les équipements émetteurs 24A,...,24N, est attribuée à chacun des équipements émetteurs 24A,...,24N.

Puis, comme dans le cas précédent, à partir de la bande passante totale, les règles d'émission permettent à chaque équipement émetteur de définir une bande passante pour chacun de ses flux de manière équitable ou pondérée.

### Sixième mode de réalisation

Selon un sixième mode de réalisation combinable avec le deuxième ou le troisième mode de réalisation, la bande passante et le cadencement pour chaque flux de deuxième type sont déterminés de manière automatique par l'unité de détermination de règles d'émission 31.

Cela peut être fait de manière optimisée en prenant en compte l'ensemble des contraintes du réseau mixte, en fonction par exemple des niveaux de priorité des flux de deuxième type, de leur nature, de la topologie du réseau, etc.

Bien entendu, d'autres modes de réalisation et notamment, différentes manières de détermination des bandes passantes des flux de deuxième type sont également possibles.

## Revendications

1. Procédé de configuration d'un réseau avionique mixte formé par un système de communication comportant :
- une pluralité de commutateurs (22A,...,22N) raccordés entre eux ;
- une pluralité d'équipements (24A,...,24N), chaque équipement (24A,...,24N) étant émetteur et/ou récepteur de données numériques et étant raccordé à au moins un commutateur (22A,...,22N) ;
le procédé comprenant les étapes suivantes :
- détermination de règles d'émission pour les équipements émetteurs (24A, ..., 24N) imposant l'émission de données numériques sous la forme de trames de premier type et de deuxième type, chaque trame de premier type étant conforme à un premier protocole, chaque trame de deuxième type étant conforme à un deuxième protocole différent du premier protocole, le premier protocole étant de type ARINC 664 P7 et le deuxième protocole étant de type Ethernet à routage prédéterminé ;
chaque trame de chaque type comportant un champ permettant de déterminer son type et étant défini par un identifiant, les trames de premier type ayant un même identifiant formant un flux de premier type, les trames de deuxième type ayant un même identifiant formant un flux de deuxième type ;
- détermination de règles de cheminement comprenant la définition d'un cheminement pour chaque flux de chaque type entre un équipement émetteur (24A,...,24N) et un équipement récepteur (24A,...,24N) ;
- détermination de règles de priorité comprenant la définition d'une priorité pour chaque flux de chaque type telle que la priorité de chaque flux de deuxième type soit inférieure à la priorité de chaque flux de premier type ;
- transmission desdites règles aux équipements (24A,...,24N) et aux commutateurs (22A,...,22N) ;
les règles d'émission imposant en outre la définition pour chaque flux de deuxième type d'une bande passante,
les règles d'émission imposent en outre la définition pour chaque flux de deuxième type d'un cadencement minimal correspondant à un intervalle minimal d'émission de deux trames consécutives de ce flux,
le cadencement minimal et la bande passante sont définis pour chaque flux de deuxième type indépendamment des bandes passantes des flux de premier type.

2. Procédé selon la revendication 1, dans lequel ledit champ permettant de déterminer le type de chaque trame correspond à un entête de cette trame.

3. Procédé selon la revendication 1 ou 2, comportant en outre une étape de détermination de règles de filtrage imposant l'application d'une opération de filtrage à chaque trame de deuxième type reçue par un commutateur (22A,...,22N), chaque opération de filtrage étant choisie dans le groupe d'opérations comprenant :
- identification de l'identifiant de la trame correspondante et rejet de cette trame lorsque son identifiant (Flow_ID) n'est pas attendu par le commutateur correspondant (22A,...,22N) ;
- identification de la taille de la trame correspondante et rejet de cette trame lorsque sa taille dépasse un seuil prédéterminé.

4. Procédé selon l'une quelconque des revendications précédentes, dans lequel les règles d'émission imposent la définition par chaque équipement émetteur (24A,...,24N) d'une bande passante totale pour l'ensemble des flux de deuxième type issus de cet équipement émetteur (24A,...,24N) indépendamment des autres équipements émetteurs (24A,...,24N), et à partir de cette bande passante totale, la bande passante pour chaque flux issu de cet équipement émetteur (24A,...,24N).

5. Procédé selon l'une quelconque des revendications 1 à 3, dans lequel les règles d'émission imposent la définition par chaque équipement émetteur (24A,...,24N) d'une bande passante totale pour l'ensemble des flux de deuxième type issus de cet équipement émetteur (24A,...,24N) en fonction des bandes passantes totales déterminées par les autres équipements émetteurs (24A,...,24N), et à partir de cette bande passante totale, la bande passante pour chaque flux issu de cet équipement émetteur (24A,...,24N).

6. Procédé selon la revendication 4 ou 5, dans lequel la bande passante pour chaque flux de deuxième type issu d'un équipement émetteur (24A,...,24N) est défini équitablement entre l'ensemble des flux de deuxième type issus de cet équipement émetteur (24A,...,24N) ou de manière pondérée en fonction de la nature de ce flux.

7. Procédé selon l'une quelconque des revendications 1 à 3, dans lequel la bande passante de chaque flux de deuxième type est définie en fonction de la nature de ce flux.

8. Procédé selon l'une quelconque des revendications précédentes, comportant en outre une étape de détermination de règles de contrôle imposant le contrôle par chaque commutateur (22A,...,22N) pour chaque flux de deuxième type entrant d'au moins l'une des valeurs suivantes :
- bande passante de ce flux ;
- gigue ;
- cadencement minimal.

9. Produit programme d'ordinateur comportant des instructions logicielles qui, lorsque mises en oeuvre par un équipement informatique, mettent en oeuvre le procédé selon l'une quelconque des revendications précédentes.

10. Module de configuration (30) d'un réseau avionique mixte comprenant des moyens techniques configurés pour mettre en oeuvre le procédé selon l'une quelconque des revendications 1 à 8.

## Patentansprüche

1. Konfigurationsverfahren eines gemischten Avionik-Netzwerks, das von einem Kommunikationssystem gebildet wird, umfassend:
- eine Vielzahl von Schaltern (22A, ..., 22N), die untereinander verbunden sind;
- eine Vielzahl von Geräten (24A, ..., 24N), wobei jedes Gerät (24A, ..., 24N) ein Sender und/oder Empfänger von digitalen Daten ist und mit mindestens einem Schalter (22A, ..., 22N) verbunden ist;
das Verfahren umfassend die folgenden Schritte:
- Bestimmen von Emissionsregeln für die sendenden Geräte (24A, ..., 24N), die das Senden von digitalen Daten in Form von Frames des ersten Typs und des zweiten Typs vorschreiben, wobei jedes Frame des ersten Typs
gemäß einem ersten Protokoll ist, jedes Frame des zweiten Typs gemäß einem zweiten Protokoll ist, das sich von dem ersten Protokoll unterscheidet, wobei das erste Protokoll vom Typ ARINC 664 P7 ist und das zweite Protokoll vom Typ Ethernet mit vorbestimmtem Routing ist;
jedes Frame von jedem Typ ein Feld umfasst, das ein Bestimmen seines Typs ermöglicht und durch eine Kennung definiert ist, wobei die Frames des ersten Typs mit derselben Kennung einen Fluss des ersten Typs bilden, Frames des zweiten Typs mit derselben Kennung einen Fluss des zweiten Typs bilden;
- Bestimmen von Leitwegregeln, umfassend das Definieren eines Leitwegs für jeden Fluss von jedem Typ zwischen einem Sendegerät (24A, ..., 24N) und einem Empfangsgerät (24A, ..., 24N);
- Bestimmen von Prioritätsregeln, umfassend das Bestimmen einer Priorität für jeden Fluss von jedem Typ, sodass die Priorität von jedem Fluss des zweiten Typs niedriger ist als die Priorität von jedem Fluss des ersten Typs;
- Übertragen der Regeln an die Geräte (24A, ..., 24N) und die Schalter (22A, ..., 22N);
wobei die Senderegeln ferner die Definition einer Bandbreite für jeden Fluss des zweiten Typs vorschreiben,
die Senderegeln ferner die Definition einer minimalen Taktung für jeden Strom des zweiten Typs vorschreiben, die einem Mindestintervall zum Senden von zwei aufeinanderfolgenden Frames dieses Flusses entspricht, die minimale Taktung und die Bandbreite für jeden Fluss des zweiten Typs unabhängig von den Bandbreiten der Flüsse des ersten Typs definiert werden.

2. Verfahren nach Anspruch 1, wobei das Feld, das ein Bestimmen des Typs von jedem Frame ermöglicht, einem Header dieses Frames entspricht.

3. Verfahren nach Anspruch 1 oder 2, ferner umfassend einen Schritt eines Bestimmens von Filterregeln, die die Anwendung eines Filtervorgangs auf jedes Frames des zweiten Typs erzwingen, der von einem Schalter (22A, ..., 22N) empfangen wird, wobei jeder Filtervorgang ausgewählt ist aus der Gruppe von Vorgängen, die Folgendes umfasst:
- Identifizieren der Kennung des entsprechenden Blocks und Zurückweisen dieses Blocks, wenn seine Kennung (Flow_ID) durch den entsprechenden Schalter (22A, ..., 22N) nicht erwartet wird;
- Identifizieren der Größe des entsprechenden Blocks und Zurückweisen dieses Blocks, wenn seine Größe einen Schwellenwert überschreitet, der gemäß der Konfigurationstabelle bestimmt wird.

4. Verfahren nach einem der vorherigen Ansprüche, wobei die Senderegeln vorschreiben, dass jedes Sendegerät (24A, ..., 24N) unabhängig von den anderen Sendegeräten (24A, ..., 24N) eine Gesamtbandbreite für alle von diesem Sendegerät (24A, ..., 24N) ausgehenden Flüsse des zweiten Typs definiert, und anhand dieser Gesamtbandbreite die Bandbreite für jeden Fluss, der von diesem Sendegerät (24A, ..., 24N) ausgeht, definiert.

5. Verfahren nach einem der Ansprüche 1 bis 3, wobei die Senderegeln vorschreiben, dass jedes Sendegerät (24A, ..., 24N) eine Gesamtbandbreite für alle Flüsse des zweiten Typs, die von diesem Sendegerät (24A, ..., 24N) ausgehen, abhängig von den Gesamtbandbreiten, die von den anderen Sendegeräten (24A, ..., 24N) bestimmt werden, und ausgehend von dieser Gesamtbandbreite die Bandbreite für jeden Fluss, der von diesem Sendegerät (24A, ..., 24N) ausgeht, definiert.

6. Verfahren nach Anspruch 4 oder 5, wobei die Bandbreite für jeden Fluss des zweiten Typs, der von einem Sendegerät (24A, ..., 24N) ausgeht, gleichmäßig zwischen allen Flüssen des zweiten Typs, die von diesem Sendegerät (24A, ..., 24N) ausgehen, oder gewichtet nach dem Typ dieses Flusses definiert wird.

7. Verfahren nach einem der Ansprüche 1 bis 3, wobei die Bandbreite von jedem Fluss des zweiten Typs abhängig von der Art dieses Flusses definiert wird.

8. Verfahren nach einem der vorherigen Ansprüche, ferner umfassend einen Schritt eines Bestimmens von Kontrollregeln, die die Kontrolle durch jeden Schalter (22A, ..., 22N) für jeden eingehenden Fluss der zweiten Art von mindestens einem der folgenden Werte vorschreiben:
- Bandbreite dieses Flusses;
- Jitter;
- minimale Taktung.

9. Computerprogrammprodukt, umfassend Softwareanweisungen, die, wenn sie von einer Rechenvorrichtung implementiert werden, das Verfahren nach einem der vorherigen Ansprüche implementieren.

10. Konfigurationsmodul (30) für ein gemischtes Avionik-Netzwerk, umfassend technische Einrichtungen, die konfiguriert sind, um das Verfahren nach einem der Ansprüche 1 bis 8 zu implementieren.

## Claims

1. A method for configuring a mixed avionic network formed by a communication system including:
- a plurality of switches (22A,...,22N) connected to one another;
- a plurality of end systems (24A,...,24N), and each end system (24A,...,24N) sending and/or receiving digital data and being connected to at least one switch (22A,...,22N);
the method comprising the following steps:
- determining sending rules for the sending end system (24A, ..., 24N) imposing the sending of digital data in the form of frames of a first type and a second type, each frame of the first type being according to a first protocol, each frame of the second type being according to a second protocol different from the first protocol, the first protocol being of type ARINC 664 P7 and the second protocol being of the Ethernet type with predetermined routing;
each frame of each type including a field making it possible to determine its type and being defined by an identifier, the frames of the first type having a same identifier forming a flow of a first type, the frames of the second type having a same identifier forming a flow of a second type;
- determining conveying rules comprising defining a path for each flow of the first type between a sending end system (24A,...,24N) and a receiving end system (24A,...,24N);
- determining priority rules comprising defining a priority for each flow of the first type such that the priority of each flow of the second type is lower than the priority of each flow of the first type;
- sending said rules to the end systems (24A,...,24N) and the switches (22A,...,22N),
the sending rules further require defining, for each flow of the second type, a bandwidth,
the sending rules further requiring defining, for each flow of the second type, a bandwidth allocation gap corresponding to a minimum sending interval of two consecutive frames of this flow,
the bandwidth allocation gap and the bandwidth being defined for each flow of the second type independently of the bandwidths of the flows of the first type or as a function of the bandwidths of the flows of the first type.

2. The method according to claim 1, wherein said field making it possible to determine the type of each frame corresponds to a header of this field.

3. The method according to claim 1 or 2, further comprising a step for determining filtering rules imposing the application of a filtering operation to each frame of the second type received by a switch (22A,...,22N), each filtering operation being chosen from the group of operations comprising:
- identifying the identifier of the corresponding frame and rejecting this frame when its identifier (Flow_ID) is not expected by the corresponding switch (22A,...,22N);
- identifying the size of the corresponding frame and rejecting this frame when its size exceeds a predetermined threshold.

4. The method according to anyone of the preceding claims, wherein the sending rules require defining, by each sending end system (24A,...,24N), a total bandwidth for all of the flows of the second type coming from this sending end system (24A,...,24N) independently of the other sending end systems (24A,...,24N), and from this overall bandwidth, the bandwidth for each flow coming from this sending end system (24A,...,24N).

5. The method according to anyone of claims 1 to 3, wherein the sending rules require defining, by each sending end system (24A,...,24N), a total bandwidth for all of the flows of the second type coming from this sending end system (24A,...,24N) as a function of the total bandwidths determined by the other sending end systems (24A,...,24N), and from this total bandwidth, the bandwidth for each flow coming from this sending end system (24A,...,24N).

6. The method according to claim 4 or 5, wherein the bandwidth for each flow of the second type coming from a sending end system (24A,...,24N) is defined equitably between the set of flows of the second type coming from this sending end system (24A,...,24N) or in a weighted manner as a function of the nature of this flow.

7. The method according to anyone of the claims 1 to 3, wherein the bandwidth of each flow of the second type is defined as a function of the nature of this flow.

8. The method according to any one of preceding claims, further including a step for determining control rules imposing the control by each switch (22A,...,22N) for each entering flow of the second type of at least one of the following values:
- bandwidth of this flow;
- jitter;
- bandwidth allocation gap.

9. A computer program product comprising software instructions which, when implemented by a piece of computer equipment, carry out the method according to any one of the preceding claims.

10. A configuration module (30) of a mixed avionic network comprising technical means configured to carry out the method according to any one of claims 1 to 8.
